# FASCICULE DE BREVET EUROPEEN

(11) **EP 1 457 386 B1**
(45) Date de publication et mention de la délivrance du brevet: **06.09.2006**
(21) Numéro de dépôt: 04360016.2
(22) Date de dépôt: 19.02.2004
(51) Int. Cl.: B60R 13/04

(54) **Dispositif de verrouillage longitudinal de sécurité pour pièce rapportée sur la tôle de carrosserie d'un véhicule routier**
Längsverriegelungsmechanismus für Einsatzelement auf dem Karosserieblech eines Strassenfahrzeugs
Longitudinal locking mechanism for insert member on the body sheet metal of a road vehicle

(30) Priorité: 05.03.2003 FR 0302717
(43) Date de publication de la demande: 15.09.2004
(73) Titulaire: REHAU S.A., 57340 Morhange (FR)
(72) Inventeur: Igle, Armand, 57340 Hombourg-Haut (FR)
(74) Mandataire: Metz, Paul

(56) Documents cités:
- DE-U- 20 203 847
- FR-A- 2 787 074

## Description

La présente invention concerne un dispositif de verrouillage longitudinal de sécurité amélioré, destiné principalement aux baguettes, moulures, enjoliveurs de ceinture de caisse ou de bas de caisse pour véhicules routiers notamment du type automobile.

L'invention se rapporte également à une baguette de protection ou d'enjolivement pour carrosserie de véhicules routiers notamment du type automobile comportant un tel dispositif de verrouillage amélioré.

Les baguettes de protection ou d'enjolivement de ce type sont des pièces en matière plastique réalisées par moulage par injection, conçues pour être montées fixes sur la carrosserie d'un véhicule.

De manière connue, la carrosserie présente une série d'ouvertures réceptrices en forme de trou de serrure, c'est-à-dire comportant une zone large prolongée par une zone plus étroite, destinées à recevoir et à coopérer avec des éléments de fixation de la baguette situés en vis-à-vis.

De façon classique, les baguettes comportent sur leur face intérieure un espace creux longitudinal, continu et ouvert en direction de la carrosserie du véhicule, dans lequel sont logés ces éléments de fixation appelés clips de fixation.

A leur extrémité libre, ces éléments de fixation sont conçus comme des têtes d'encliquetage destinées à se mettre en prise avec des ouvertures de la carrosserie qui leurs sont associées, ces têtes d'encliquetage étant reliées au reste du clip par un élément central plus étroit servant d'axe au clip de fixation.

Les ouvertures réceptrices peuvent être alignées ou non, disposées en quinconces ou autrement pour permettre l'accrochage des baguettes de section évolutive.

Au cours du montage, le monteur plaque la baguette contre la carrosserie en faisant passer la tête d'encliquetage des clips de fixation à travers la zone large des ouvertures. Puis, il effectue un déplacement longitudinal de la baguette, de manière que l'axe de chacun des clips de fixation pénètre dans la zone étroite des ouvertures.

Simultanément, la face inférieure des têtes d'encliquetage vient en prise sous les bords de la carrosserie entourant la zone étroite des ouvertures, assurant ainsi une solidarisation par encliquetage de la baguette à la carrosserie.

La fixation de la baguette doit alors être complétée par un verrouillage longitudinal, car un simple clipsage n'est pas suffisant pour la tenue de maintien exigée par les constructeurs. En effet, lors du roulage, la baguette se trouve soumise à d'importantes vibrations qui ont tendance à faire ressortir les clips de la zone étroite des ouvertures et de ce fait à désengager la baguette. Par ailleurs, les baguettes subissent des contraintes et des poussées de translation lors du passage des rouleaux de lavage dans les machines et tunnels de lavage des véhicules routiers. Ces poussées peuvent atteindre des valeurs de force arrivant à désengager les baguettes non ou mal verrouillées. Celles-ci ne tenant plus suffisamment finissent par tomber. Une fixation dite positive doit donc être prévue et réalisée afin de s'opposer à tout mouvement longitudinal de la baguette.

Un tel verrouillage longitudinal peut prendre différentes formes. Dans l'art antérieur, on a par exemple imaginé de visser la baguette à la carrosserie. Un tel vissage se retrouve notamment sur la baguette décrite dans le brevet REHAU FR 2.742.711 qui comporte à un endroit de sa longueur un élément de fixation conformé en poche destiné à recevoir un écrou. Une vis traversant la carrosserie peut alors coopérer avec cet écrou pour réaliser le verrouillage.

Un dispositif comportant les caractéristiques du préambule de la revendication 1 est connu de FR 2 787 074.

Bien que le verrouillage réalisé soit d'une grande qualité, ce système présente de nombreux inconvénients. En effet, il nécessite des éléments supplémentaires en plus de la baguette (vis, écrou) et rallonge considérablement le temps de pose de la baguette. En effet, le monteur est obligé, après la mise en place des clips de fixation, de faire le tour du panneau de carrosserie, puis d'effectuer le vissage.

De plus, il n'est pas toujours possible de réaliser une ouverture ou de percer un trou dans la carrosserie au bon endroit du fait de la présence de renforts, de pliage, de joints ou autres éléments ou conformations.

Un autre type d'éléments de verrouillage longitudinal, plus satisfaisant, a alors été développé dans l'art antérieur. Il s'agit d'un dispositif de verrouillage longitudinal parfois appelé « marteau de verrouillage » qui est intégré à la baguette, c'est-à-dire réalisé d'une seule pièce et d'un seul tenant avec la baguette au cours d'une unique étape de moulage.

Ce dispositif se présente sous la forme d'une languette flexible sensiblement horizontale et longitudinale par rapport à la baguette, qui s'étend en porte-à-faux à partir d'un socle rattaché à la face intérieure de la baguette. Son extrémité libre porte un ergot de verrouillage destiné à coopérer avec une ouverture adaptée de la carrosserie.

Lors de la première étape du montage de la baguette, correspondant à l'insertion des têtes de clip dans la zone large des ouvertures de carrosserie, l'ergot de verrouillage se trouve en appui contre la carrosserie, la languette du dispositif étant fléchie.

Par la suite, l'opérateur déplace la baguette pour faire passer la tête des clips sous la zone étroite des ouvertures. A la fin de ce mouvement, l'ergot de verrouillage du dispositif se trouve positionné en face de l'ouverture de carrosserie lui correspondant. La languette flexible se redresse alors et l'ergot rentre dans l'ouverture de carrosserie, ce qui assure le verrouillage longitudinal de la baguette en s'opposant à tout mouvement de démontage de celle-ci.

Malgré l'apparente simplicité de cette méthode de montage, des problèmes sont souvent rencontrés avec ce type de dispositifs intégrés de verrouillage, devant coopérer avec une ouverture de la carrosserie.

En effet, toutes les étapes du montage de la baguette s'effectuent en aveugle, la baguette opaque masquant la zone de montage. Or, une certaine précision est requise de la part de l'opérateur, pour que l'ergot pénètre réellement dans l'ouverture de carrosserie correspondante et que le verrouillage du dispositif de sécurité soit réalisé de façon efficace. La difficulté est encore accrue du fait des cadences de montage extrêmement rapides à respecter.

Une autre difficulté provient de la matière utilisée. Pour des raisons de coût on utilise majoritairement du polypropylène, matière qui une fois conformée en une pièce quelconque est connue pour ne pas revenir facilement et rapidement à sa forme initiale après déformation.

Toutes ces difficultés sont la cause de nombreux problèmes ou défauts de fixation de la baguette. Le plus souvent, l'opérateur n'a pas poussé suffisamment la baguette lors de la deuxième étape de montage. L'ergot du dispositif de verrouillage, n'ayant pas été amené jusqu'en face de l'ouverture de carrosserie, ne peut remplir sa fonction.

Par la suite, ces baguettes, non complètement ou correctement fixées, se décrochent lors du roulage ou lors du lavage par application de rouleaux et finissent par tomber.

Le but de l'invention est de résoudre les inconvénients précités. Pour cela, l'invention enseigne un dispositif amélioré dont le verrouillage est facilité et qui possède un dispositif de sécurité de type anti-retour s'opposant au retrait de la baguette lorsque celle-ci n'a pas été complètement poussée.

Pour résoudre ce problème technique, le dispositif de verrouillage longitudinal selon l'invention comprend les caractéristiques selon la revendication 1. La platine est maintenue à distance de cette face intérieure par au moins un moyen de rehausse et présente sur sa face supérieure au moins une structure de verrouillage pénétrant dans l'ouverture de verrouillage correspondante et assurant le verrouillage par butée-arrêt contre le bord transversal de l'ouverture de verrouillage situé en aval.

De préférence, la platine longitudinale comporte, conformées dans sa face supérieure, au moins deux structures successives de verrouillage.

D'autres caractéristiques et avantages de l'invention apparaîtront à la lecture de la description détaillée qui va suivre, description faite en référence aux dessins annexés, dans lesquels :
- la figure 1 est une vue d'ensemble en perspective de la face intérieure d'une fraction de longueur de baguette comportant plusieurs clips intégrés et un dispositif de verrouillage selon une première variante l'invention placé en extrémité ;
- la figure 2 est une vue schématique en perspective de la première variante ;
- la figure 3 est une vue en coupe longitudinale de la première variante ;
- la figure 4 est une vue frontale de la première variante ;
- les figures 5 à 9 sont des vues schématiques de profil formant une séquence illustrative du fonctionnement du dispositif représenté sur les figures de 1 à 4 ;
- la figure 10 est une vue d'ensemble en perspective de la face intérieure d'une fraction de longueur de baguette comportant plusieurs clips intégrés et un dispositif de verrouillage selon une deuxième variante l'invention placé en extrémité ;
- la figure 11 est une vue schématique en perspective de la deuxième variante ;
- la figure 12 est une vue en coupe longitudinale de la deuxième variante ;
- la figure 13 est une vue frontale de la deuxième variante ;
- les figures 14 à 18 sont des vues schématiques de profil formant une séquence illustrative du fonctionnement du dispositif représenté sur les figures de 10 à 13.

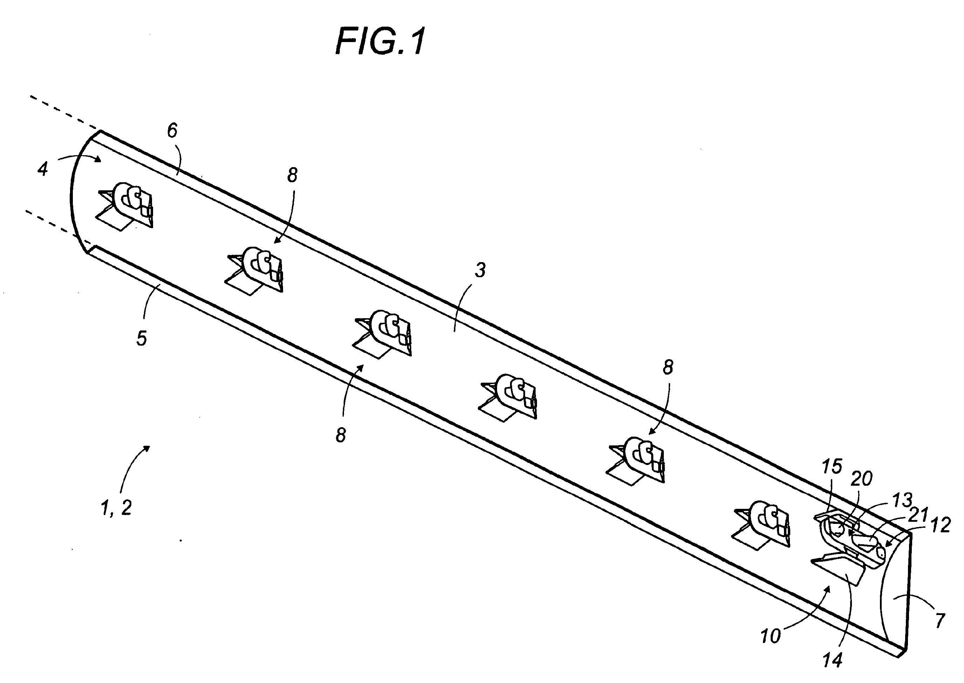

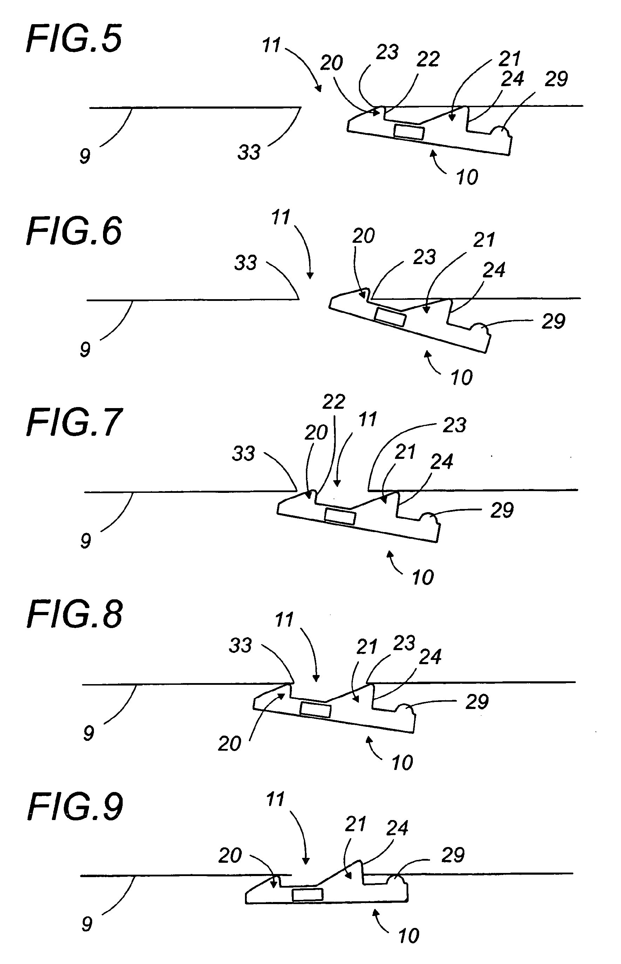

Le dispositif de verrouillage de sécurité selon la présente invention va maintenant être décrit de façon détaillée par ses deux variantes en référence aux figures 1 à 4 et 10 à 13. Les éléments équivalents représentés sur les différentes figures porteront les mêmes références numériques. On procédera ensuite à la description du fonctionnement de l'une et l'autre variante en référence aux figures 5 à 9 et 14 à 18.

On a représenté sur les figures générales 1 et 10, un tronçon 1 d'un élément rapporté 2 ou d'une pièce allongée à rapporter et à fixer sur la carrosserie d'un véhicule routier. Il s'agit par exemple d'un tronçon 1 de baguette 2, mais aussi de bande, moulure décorative ou protectrice, de ceinture de caisse, de bas de caisse ou tout autre élément ou accessoire à rapporter sur une carrosserie ou tout élément analogue.

Ce tronçon 1 de baguette 2 se présente sous la forme d'une pièce allongée, à corps de section transversale bombée constante ou évolutive de manière à délimiter par sa face intérieure 3 un espace concave 4 longitudinal et continu qui constitue le volume intérieur entre le corps de la baguette et la partie de la carrosserie du véhicule routier recouverte par celle-ci.

De manière classique, l'espace concave 4 est délimité latéralement par deux bords longitudinaux, 5 et 6 sensiblement horizontaux parallèles ou obliques selon les exigences de style. Il est également bordé à l'arrière par un bord transversal 7 d'extrémité, par exemple sensiblement vertical et perpendiculaire aux bords latéraux 5 et 6.

La baguette 2 comporte sur sa face intérieure 3 des clips de fixation 8 dits intégrés, c'est-à-dire réalisés d'une seule pièce et d'un seul tenant avec la baguette au cours d'une unique étape de moulage.

Ces clips de fixation 8 permettent le montage et la fixation de la baguette 2 sur la carrosserie d'un véhicule. A cette fin, ils sont conçus pour coopérer avec une série d'ouvertures en forme de « trou de serrure » prévues dans la tôle 9 de la carrosserie notamment au niveau des portes ou des bas de caisse.

Les clips de fixation 8 sont ici positionnés de manière équidistante le long de la ligne médiane de la baguette. Néanmoins, suivant les modèles de baguette et les possibilités d'ouvertures dans la carrosserie, ces clips peuvent être disposés différemment.

Les clips de fixation 8 représentés correspondent à une variante de forme parmi bien d'autres et ne constituent par conséquent qu'un exemple pour les besoins de la description. Comme on le verra ci-après, la présente invention est indépendante de la forme exacte de ces clips de fixation et de leur position pourvu qu'ils coopèrent avec une ouverture dans la tôle 9 de la carrosserie et que le montage de la baguette 2 nécessite un mouvement de translation longitudinal par exemple par rapport au véhicule routier.

La baguette 2 comporte également au moins un dispositif de verrouillage longitudinal 10 de sécurité selon la présente invention, disposé de préférence à l'une ou à chacune de ses deux extrémités. Ce dispositif de verrouillage longitudinal 10 de sécurité est destiné à coopérer avec une ouverture 11 ménagée en vis-à-vis dans la tôle 9 de la carrosserie du véhicule routier.

L'invention se rapporte également à un élément 2 du type baguette, bande, moulure ou analogue, rapporté et fixé sur la tôle 9 de carrosserie d'un véhicule routier, comportant sur sa face intérieure 3 au moins un clip de fixation 8 destiné à coopérer avec une ouverture correspondante située en regard dans la carrosserie 9 du véhicule, caractérisée en ce qu'elle comporte au moins un tel dispositif de verrouillage longitudinal de sécurité 10.

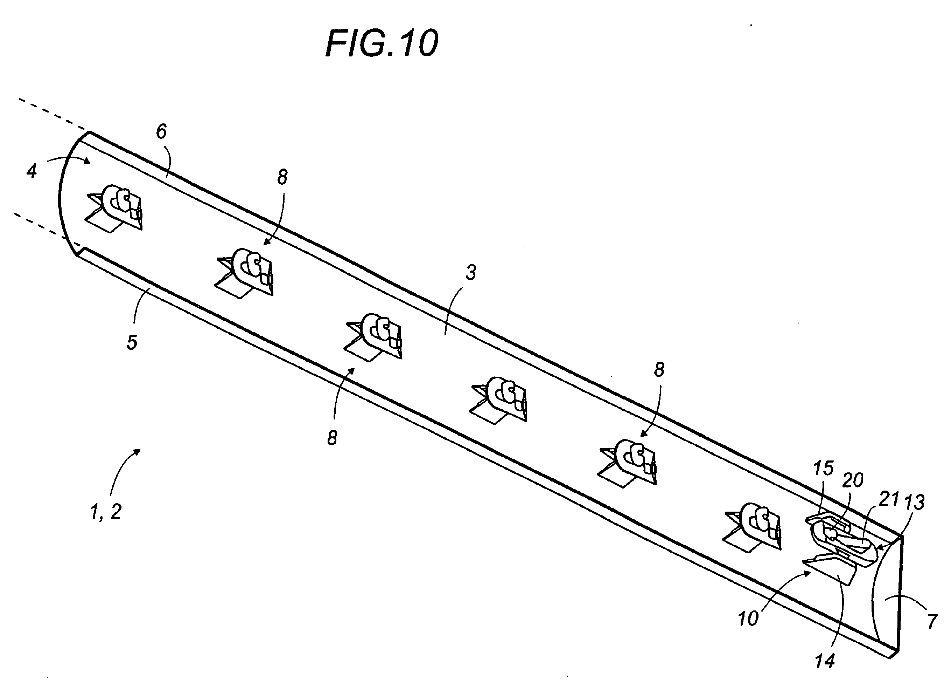

Sur les figures 1 et 10, le dispositif de verrouillage 10 est seul et placé à proximité du rebord transversal arrière 7. Il est également décalé latéralement par rapport à l'axe d'alignement des clips de fixation 8.

Cependant, ces figures ne représentent que des exemples de réalisation. En effet, le dispositif de verrouillage 10 de sécurité selon l'invention peut se trouver à un endroit quelconque de la baguette, aligné ou décalé par rapport aux clips de fixation 8, son positionnement dépendant entre autres des possibilités de réalisation de l'ouverture 11 dans la tôle 9 de la carrosserie.

De même, le dispositif de verrouillage longitudinal 10 de sécurité n'est pas forcément unique. Il peut par exemple en exister deux, un à l'avant et l'autre à l'arrière pour les pièces longues ou deux pour une même extrémité ou deux pour les deux extrémités pour des pièces larges comportant par exemple deux rangées de clips.

Le dispositif de verrouillage 10 de sécurité se présente sous la forme d'un corps 12 solidaire de la face intérieure 3 de la baguette 2, formé par moulage par injection en même temps que la baguette 2.

Le corps 12 du dispositif est constitué d'une platine de verrouillage 13 maintenue à une certaine distance du dos de la baguette 2 par des moyens de rehausse constitués par exemple par deux pièces de flanc 14 et 15 qui assurent la liaison mécanique de la platine avec la face intérieure 3 de la baguette 2 et maintiennent le corps 12 à une certaine distance de cette face intérieure 3 délimitant ainsi une structure en pont. La platine 13 est de forme générale rectangulaire et se trouve disposée en orientation parallèle à la direction de translation de pose c'est-à-dire dans l'exemple décrit de façon longitudinale par rapport à l'élément rapporté. Les deux pièces de flanc 14 et 15 sont de même hauteur si le dispositif de verrouillage de sécurité est placé dans l'axe médian de la baguette 2 et de hauteur différente, comme représenté, dans le cas d'une position décalée latéralement de manière à garder la platine parallèle au plan de l'ouverture de réception et de verrouillage dans la tôle 9 de la carrosserie. Ce plan est dans la majorité des cas parallèle au plan défini par les deux bords longitudinaux 5 et 6.

La platine est reliée latéralement de chaque côté à une pièce de flanc 14 et 15 à chaque fois par une liaison de matière appelée pontet respectivement 16 et 17, réalisée de préférence dans la même matière plastique que celle de la baguette 2.

Ces pontets 16 et 17 sont plats et affectent par exemple comme représenté et vus en plan, la forme générale de profil d'une lentille biconcave, c'est-à-dire présentent un resserrement central respectivement 18 et 19. Cette forme technique procure aux pontets une aptitude à la déformation par torsion. La platine de verrouillage 13, ainsi reliée aux pièces de flanc 14 et 15, présente une liberté de mouvement de faible amplitude en inclinaison longitudinale et dans une bien moindre mesure en inclinaison latérale. Il s'agit d'une suspension élastique procurant à la platine une grande facilité de s'effacer légèrement par basculement pour mettre une de ses extrémités en retrait afin d'entrer dans l'ouverture de verrouillage puis de s'y caler comme on le verra ci-après.

La platine de verrouillage 13 présente, conformées sur sa face supérieure au moins une structure de verrouillage par exemple du type cran présentant une face transversale d'arrêt. Selon l'exemple représenté, elle présente deux structures saillantes de verrouillage 20 et 21 destinées à venir coopérer avec l'ouverture de verrouillage 11 prévue dans la tôle 9 de la carrosserie.

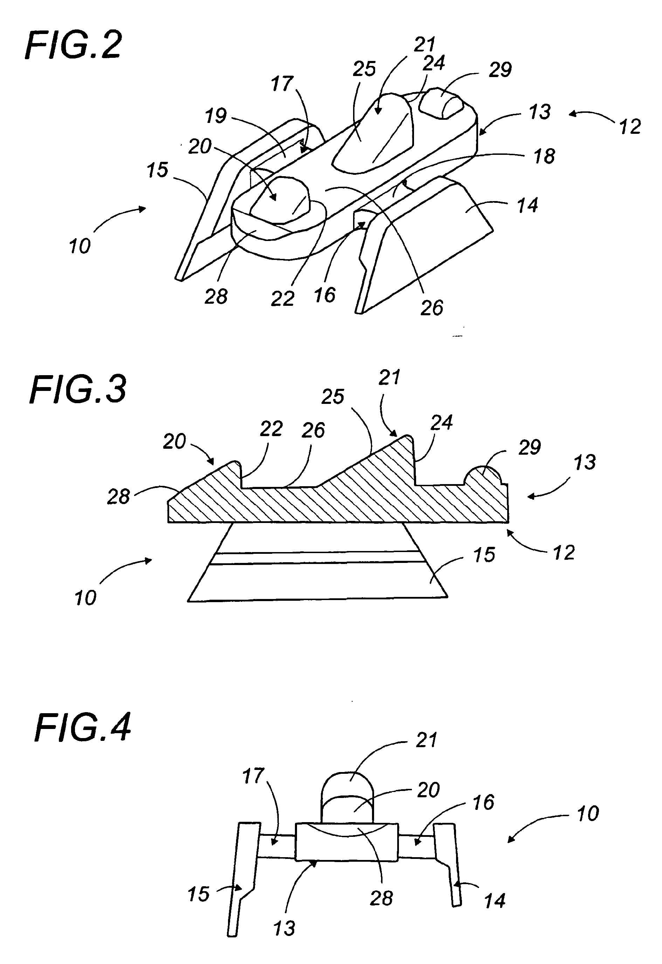

Pour la première variante représentée sur les figures 2 à 10, il s'agit d'abord vers l'avant d'un ergot d'extrémité avant 20 sous la forme par exemple d'une saillie cylindrique inclinée à extrémité arrière conformée en front droit d'arrêt 22. Cet ergot d'extrémité agit comme saillie de basculement lors du mouvement d'engagement dans l'ouverture correspondante de sécurité dans la tôle de carrosserie. Cette extrémité en front droit d'arrêt 22 constitue un premier contact d'arrêt avec le bord aval ou arrière 23 de l'ouverture de verrouillage 11 pour assurer un blocage primaire de sécurité en cas de nécessité. Cet ergot est suivi de la deuxième structure saillante 21 de verrouillage sous la forme par exemple d'un cylindre incliné à extrémité arrière conformée en front droit d'arrêt 24 pour réaliser le blocage de verrouillage de sécurité en bonne position finale de montage contre le bord aval ou arrière 23 de l'ouverture de verrouillage 11. Le cylindre incliné de verrouillage 21 forme par son dos c'est-à-dire par sa partie supérieure une rampe d'appui 25 débutant après une plage technique plane 26 consécutive au premier front droit d'arrêt 22.

La forme exacte de la platine de verrouillage 13 varie selon les deux variantes représentées sur les figures. Bien entendu, il ne s'agit que d'exemples d'illustration d'un même principe inventif.

En ce qui concerne la première variante (figures 1 à 10) la platine de verrouillage 13 présente une face supérieure plane 27 comportant plusieurs saillies de blocage et d'immobilisation conformées dans la masse par moulage. Elle présente une extrémité avant en pan coupé 28 selon un biseau incliné en rampe montante vers l'arrière suivie d'une première saillie avant de blocage 20 qui se termine à l'arrière par un front arrière plan de butée 22 perpendiculaire à la platine. Cette saillie avant est suivie après un espace plat 26 d'une saillie principale 21 terminée à l'arrière par un front principal arrière de butée 24 réalisant l'immobilisation de verrouillage contre le bord transversal arrière 23 de l'ouverture de verrouillage. La platine se termine par une saillie d'extrémité arrière 29 de forme générale en demi-cylindre couché constituant un coussinet d'appui ainsi qu'un marteau pour la confirmation sonore du clippage lors de la fin de pose lorsqu'il tape contre la tôle de la carrosserie au moment du basculement inverse et final de la platine 13.

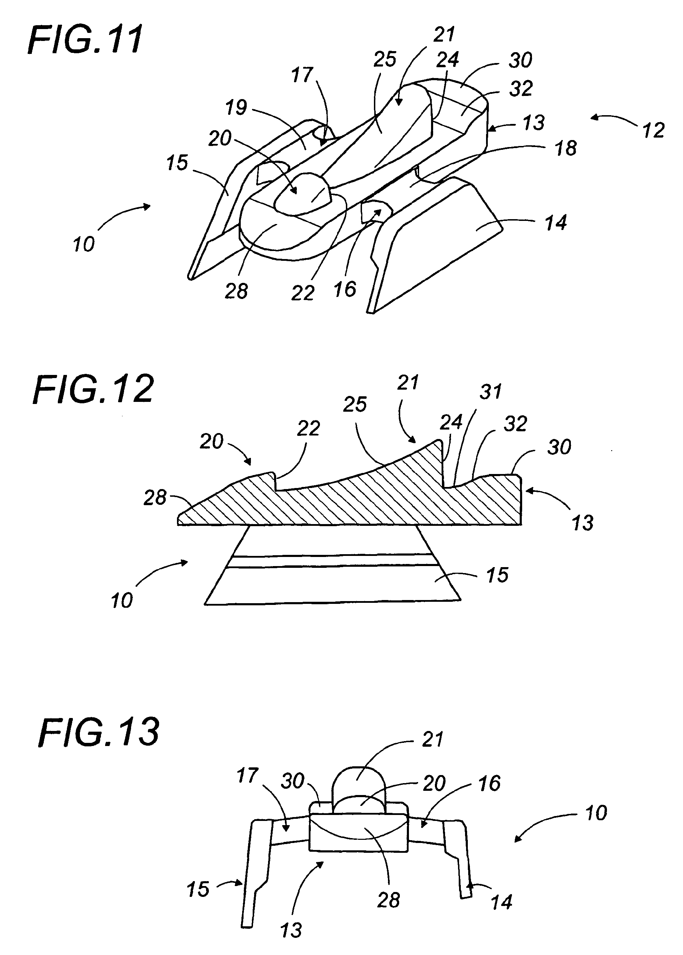

La deuxième variante représentée sur les figures 11 à 18 diffère légèrement de la première variante en ce que le nez avant 28 en rampe montante est un plan incliné plus étendu mais dont l'extrémité est beaucoup plus fine, en ce que l'espace 26 entre les deux saillies 20 et 21 n'existe pas, ce qui rend le front arrière de butée 22 de la première saillie de blocage 20 moins important car la rampe de dégagement 25 débute aussitôt et plus haut dans l'épaisseur de la platine. La deuxième variante diffère également de la première en ce que les rampes des première et deuxième saillies de blocage sont incurvées et progressives ce qui permet de diminuer l'effort de montage et de faciliter l'engagement c'est-à-dire éviter que le nez avant 28 ne bute dans le bord avant de l'ouverture.

L'extrémité arrière de la platine de verrouillage de cette deuxième variante est plus courte et ne comporte plus de saillie d'extrémité arrière 29 en demi-cylindre couché, mais est une surface plane terminale d'appui 30 légèrement montante séparée du front arrière de butée 24 de la deuxième saillie 21 par un espace technique intermédiaire formé successivement vers l'arrière par un intervalle plat 31 correspondant à la face supérieure de la platine suivi d'un plan incliné 32 de faible largeur, ce qui évite les interférences avec la peau intérieure de la baguette.

De plus, pour cette deuxième variante, les pontets 16 et 17 sont inclinés de manière à diminuer la hauteur des pièces de flanc 14 et 15, améliorant ainsi encore l'élasticité de la liaison et empêchant que la partie supérieure des pièces de flanc 14 et 15, qui sont incompressibles, ne touche la tôle de carrosserie.

On a décrit ci-dessus l'invention comme un dispositif faisant corps avec la baguette par ses pièces de flanc, c'est-à-dire comme étant réalisé dans la même matière et fabriqué d'une pièce dans la même opération de moulage que la baguette. Ce dispositif peut également être réalisé sous la forme d'une pièce séparée, réalisée dans une matière différente de ou identique à celle de la baguette et rapportée par tout moyen par exemple de clipsage ou autre sur le dos de la baguette directement ou indirectement c'est-à-dire sur une naissance d'une forme ou par une pièce intermédiaire. Ainsi, la platine 13 peut par exemple être reliée par chacun de ses côtés latéraux à travers une liaison élastique à une pièce de flanc 14 ou 15 reliée chacune au dos de la pièce rapporté par un moyen d'assemblage ou de fixation conférant au dispositif une conformation générale en pont.

On examinera maintenant la pose d'un élément rapporté 2 sur la carrosserie par la succession des mouvements du dispositif de verrouillage selon l'invention et ceci dans le cas des deux variantes.

Pour la première variante, en position initiale (figure 5), le dispositif de verrouillage selon l'invention se trouve contre la carrosserie 9, son extrémité avant dépassant de l'ouverture de verrouillage 11. Cette position correspond à la présentation des clips intégrés de la baguette 2 chacun à l'entrée de leur propre ouverture de clipsage. Ensuite, les clips entrent chacun dans leur ouverture respective entraînant une légère poussée de la baguette 2 contre la carrosserie correspondant à la figure 6 position dans laquelle l'extrémité avant en pan coupé 28 de la platine 13 et la première saillie de blocage 20 sont entrées dans l'ouverture de verrouillage 11, le front de butée arrière 22 de la première saillie 20 venant s'immobiliser par butée contre le bord transversal arrière 23 de l'ouverture de verrouillage. Cette position cabrée vers l'avant résulte d'un premier basculement de la platine 13 provenant de la poussée sur la baguette en rapprochement de la carrosserie ayant pour effet l'appui sur l'extrémité haute de la deuxième saillie 21 entraînant le basculement en position cabrée. Cette position cabrée correspond à une immobilisation primaire de sécurité permettant de garantir un effet anti-recul c'est-à-dire de maintien de la baguette 2 même si les clips intégrés ne sont pas enfoncés à fond.

En poursuivant le mouvement d'avance de la baguette dans sa position finale, le dispositif bascule légèrement vers l'avant sous l'effet du franchissement du bord avant 33 de l'ouverture 11 par le nez et la rampe 28 de l'extrémité avant (figure 7). Le mouvement d'avance se poursuit jusqu'à franchissement de ce bord avant 33 de l'ouverture 11 de verrouillage par la saillie avant 20. Au cours de ce mouvement, la rampe avant contraint le dispositif en basculement vers l'avant jusqu'à un certain angle. Ce mouvement de basculement est alors empêché par le contact de l'extrémité haute de la deuxième saillie 21 contre la carrosserie 9 (figure 8), l'extrémité haute de la saillie 21 ayant déjà franchi le bord avant 33. Cette tension est libérée après que cette extrémité haute ait franchit le bord transversal arrière 23 c'est-à-dire le bord aval de l'ouverture de verrouillage 11 (figure 9). Le dispositif 10 vient ensuite par effet de rappel élastique en torsion se plaquer et se caler avec une certaine force contre la carrosserie dans sa position de verrouillage. Au cours de ce mouvement, la saillie d'appui d'extrémité arrière 29 vient taper contre la carrosserie provoquant un bruit caractéristique, bruit discernable par l'opérateur ce qui lui confirme la mise en place du verrouillage. La baguette 2 est ainsi fixée par les clips intégrés et immobilisée sans recul possible sauf déformation importante de la pièce rapportée.

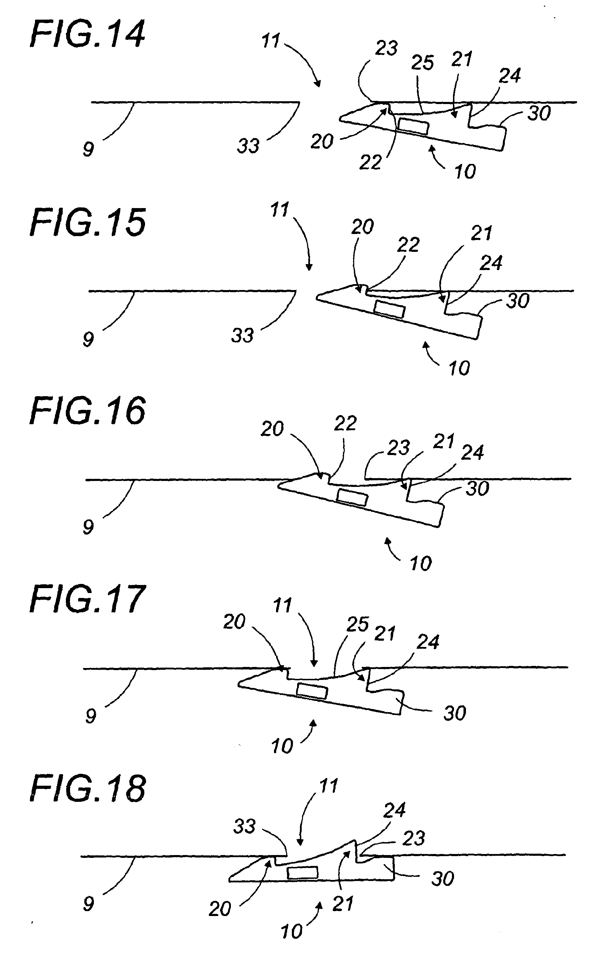

Les phases de pose et de verrouillage de la deuxième variante se déroulent à peu près de la même façon. En se référant aux figures 14 à 18 on remarque la même progression et le même travail de basculement du dispositif selon l'invention. Les mouvements sont plus aisés car les rampes sont progressives et incurvées pour faciliter le montage. De plus la saillie arrière d'appui 30 est plane ce qui assure un meilleur contact d'appui et un meilleur calage.

Ce système à double basculement selon le fonctionnement décrit ci-dessus est prévu principalement mais non exclusivement, pour pallier la faible élasticité de la matière utilisée, notamment à base de polypropylène. Le double basculement force la torsion des pontets dans un sens puis dans l'autre même avec un mouvement non élastique ce qui garantit le verrouillage.

Ceci étant, l'invention n'est pas dépendante de la matière utilisée. Elle trouve une application intéressante pour une ou des matière(s) à faible degré d'élasticité mais convient également pour des matières différentes dont l'élasticité est supérieure.

## Revendications

1. Dispositif de verrouillage de sécurité pour la sécurité du maintien d'un élément rapporté (2) et fixé par clipsage ou autre moyen sur la tôle (9) de carrosserie d'un véhicule routier du type baguette, bande, moulure ou analogue à structure d'arrêt coopérant avec un des bords d'une ouverture de verrouillage (11) dans la tôle (9) de carrosserie du véhicule routier, le dispositif présentant une platine (13) longitudinale par rapport à l'élément rapporté reliée à la face intérieure (3) de l'élément rapporté (2) par au moins une liaison élastique, la platine (13) étant maintenue à distance de cette face intérieure (3) par au moins un moyen de rehausse (14, 15), la platine présentant sur sa face supérieure au mo'ns une structure de verrouillage (20, 21) **caractérisé en ce que** cette liaison élastique est au moins déformable en torsion et **en ce que** la structure de verrouillage pénétre dans l'ouverture de verrouillage (11) par rappel contraint en torsion de cette liaison élastique et assurant le verrouillage par butée-arrêt contre le bord transversal (23) de l'ouverture de verrouillage (11) situé en aval.

2. Dispositif de verrouillage de sécurité selon la revendication 1 **caractérisé en ce que** l'ensemble : platine (13), liaison(s) élastique(s) et moyen(s) de rehausse forme une pièce séparée, réalisée dans une matière différente de ou identique à celle de l'élément rapporté.

3. Dispositif de verrouillage de sécurité selon la revendication 1 **caractérisé en ce que** l'ensemble platine (13), liaison(s) élastique(s) et moyen(s) de rehausse fait corps avec l'élément rapporté sous la forme d'un élément réalisé dans la même matière et fabriqué d'une pièce dans la même opération de moulage que l'élément rapporté.

4. Dispositif de verrouillage de sécurité selon la revendication 1 ou 2 **caractérisé en ce que** la platine (13) est reliée par chacun de ses côtés latéraux à travers une liaison élastique à une pièce de flanc (14) ou (15) reliée chacune au dos de la pièce rapportée par un moyen d'assemblage ou de fixation conférant au dispositif une conformation générale en pont.

5. Dispositif de verrouillage de sécurité selon la revendication 1 ou 3 **caractérisé en ce que** la platine (13) est reliée par chacun de ses côtés latéraux à travers une liaison élastique à une pièce de flanc (14) ou (15) dont chaque base est issue de la matière de l'élément rapporté (2) conférant au dispositif une conformation générale en pont.

6. Dispositif de verrouillage longitudinal de sécurité selon l'une quelconque des revendications précédentes **caractérisé en ce qu'**il est présent au moins une fois à l'une des extrémités de l'élément rapporté.

7. Dispositif de verrouillage longitudinal de sécurité selon la revendication précédente **caractérisé en ce que** sa position est centrale.

8. Dispositif de verrouillage longitudinal de sécurité selon la revendication 6 **caractérisé en ce que** sa position est excentrée.

9. Dispositif de verrouillage longitudinal de sécurité selon la revendication 4 ou 5 **caractérisé en ce que** la platine (13) est reliée transversalement à chacune des pièces de flanc (14, 15) à chaque fois par une liaison transversale élastique (16, 17).

10. Dispositif de verrouillage longitudinal de sécurité selon la revendication précédente **caractérisé en ce que** chacune de ces liaisons (16, 17) est plate et de forme générale à rétrécissement central (18, 19).

11. Dispositif de verrouillage longitudinal de sécurité selon l'une quelconque des revendications précédentes **caractérisé en ce que** la platine (13) comporte, conformées dans sa face supérieure, deux structures successives de verrouillage (20, 21).

12. Dispositif de verrouillage longitudinal de sécurité selon la revendication précédente **caractérisé en ce que** les structures successives de verrouillage (20, 21) sont chacune une saillie à extrémité arrière en front droit d'arrêt (22, 24).

13. Dispositif de verrouillage longitudinal de sécurité selon la revendication 11 ou 12 **caractérisé en ce qu'**entre les deux structures successives de verrouillage (20, 21) existe un espace plan (26).

14. Dispositif de verrouillage longitudinal de sécurité selon l'une quelconque des revendications 11 à 13 **caractérisé en ce que** la deuxième structure de verrouillage (21) présente sur son dos une rampe d'appui (25).

15. Dispositif de verrouillage longitudinal de sécurité selon l'une quelconque des revendications précédentes **caractérisé en ce que** la platine (13) présente une extrémité avant en rampe de basculement (28).

16. Dispositif de verrouillage longitudinal de sécurité selon l'une quelconque des revendications précédentes **caractérisé en ce que** la platine (13) comporte à son extrémité arrière une saillie d'appui (29, 30).

17. Dispositif de verrouillage longitudinal de sécurité selon la revendication précédente **caractérisé en ce que** la saillie d'appui (29) présente une forme bombée convexe.

18. Dispositif de verrouillage longitudinal de sécurité selon la revendication 16 **caractérisé en ce que** la saillie de l'extrémité arrière est une surface plane d'appui (30) surélevée par rapport à la face supérieure de la platine (13), surface précédée par un plan incliné (32).

19. Elément (2) du type baguette, bande, moulure ou analogue, rapporté et fixé sur la tôle (9) de carrosserie d'un véhicule routier, comportant sur sa face intérieure (3) au moins un clip de fixation (8) destiné à coopérer avec une ouverture correspondante située en regard dans la carrosserie (9) du véhicule, **caractérisée en ce qu'**elle comporte au moins un dispositif de verrouillage longitudinal de sécurité (10) selon l'une quelconque des revendications précédentes.

## Claims

1. A safety locking device for holding in place an attached element (2) and the fixing by clipsing or another method to the bodywork (9) of a road vehicle of strips, trims, mouldings or similar items, using a locking structure which fits into one of the edges of a locking opening (11) in the bodywork (9) of a road vehicle, this device having a plate (13) which is longitudinal with respect to the item to be attached (2) by at least one elastic link, the plate (13) being maintained at a distance from this internal face (3) by at least one device (14,15) the plate having on its number face at least one locking structure (20,21) **characterised by** the fact that this elastic link can at least be twisted and that the locking structure enters the locking opening (11) by testing of this elastic link and assuring snap-lock against the transverse edge (23) of the locking opening (11) located downstream.

2. A safety locking device as described claim 1 **characterised by** the fact that the assembly : Plate (13) elastic links and supports form a separate piece, made from a different material or an identical material to that of the piece to be attached.

3. Safety locking device as described in claim 1 **characterised by** the fact that the assembly plate (13) elastic links and supports are in one piece with the item to be attached in the form of an element made from the same material and produced in one piece during a single moulding operation.

4. Safety locking device as described in claim 1 or 2 **characterised by** the fact that the plate 13 is connected by each of its lateral sides via an elastic link to a side piece 14 or 15 each of which are connected to the piece to be attached by means of an assembly or an attaching part giving the general device the appearance of a bridge.

5. Safety locking device as described in claim 1 or 3 **characterised by** the fact that the plate 13 is connected by each of its lateral sides via an elastic link to a side piece 14 or 15 each of which are connected to the piece to be attached by means of an assembly or an attaching part giving the general device the appearance of a bridge.

6. Longitudinal safety locking device as described in one of the above claims **characterised by** the fact that it is present at least once at one of the ends of the piece to be attached.

7. A longitudinal safety locking device as described in the previous claim **characterised by** the fact that its position is central.

8. A longitudinal safety locking device as described in claim 6 **characterised by** the fact that its position is offset.

9. Longitudinal safety locking device as described in claim 4 or 5 **characterised by** the fact that the plate (13) is connected transversely to each other side pieces (14,15) by a transverse elastic link (16,17).

10. Longitudinal safety locking device as described in the previous claim **characterised by** the fact that each of the links (16,17) is flat and with a narrow central part (18,19).

11. Longitudinal safety locking device as described in one of the previous claims **characterised by** the fact that the plate (13) has two successive locking structures (20,21) on its upper face.

12. Longitudinal safety locking device as described in the previous claim **characterised by** the fact that the successive locking structures (20,21) are an end stop and projection (22,24.

13. Longitudinal safety locking device as described in claim 11 or 12 **characterised by** the fact that there is a flat space (26) between the two successive locking structures (20,21).

14. Longitudinal safety locking device as described in one of the claims 11 to 13 **characterised by** the fact that the second locking structure (21) has a support slope on its back face.

15. Longitudinal safety locking device as described in one of the previous claims **characterised by** the fact that the plate (13) has a tilting slope(28) on its front end.

16. Longitudinal safety locking device as described in one of the previous claims **characterised by** the fact that the plate (13) has a support projection at its rear end (29,30).

17. A longitudinal safety locking device as described in the previous claim **characterised by** the fact that their support projection (29) is convex domed.

18. Longitudinal safety locking device as described in claim 16 **characterised by** the fact that the rear projection is a flat support surface (30) raised compared to the upper face of the plate (13) and preceded by a slope (32).

19. An element (2), either strip, moulding, trim or similar, presented and fixed to a vehicle bodywork panel 9, whose internal face (3) includes at least one attaching clip (8) designed to fit into a corresponding opening in the vehicle bodywork (9), **characterised by** the fact that it includes at least one longitudinal safety locking device 10 as described in one of the previous claims.

## Patentansprüche

1. Vorrichtung zur Sicherheitsverriegelung für den sicheren Halt eines angefügten und durch clipsen oder anderen Mitteln am Blech (9) der Karosserie von einem Straßenfahrzeug befestigten Teils (2), vom Typ Schutzleiste, Streifen, Stoßleiste oder Ähnliches mit einer Verschlussvorrichtung, die mit einem der Ränder einer Öffnung zur Verriegelung (11) im Blech (9) der Karosserie des Straßenfahrzeugs zusammenwirkt; diese Vorrichtung weist eine längs zum angefügten Teil befindliche Riegelplatte (13) auf, die durch eine elastische Verbindung mit der Innenseite (3) des angefügten Teils (2) verbunden ist, die Riegelplatte (13) wird durch wenigstens ein Mittel zur Abstandhaltung (14, 15) auf Abstand zu dieser Innenseite (3) gehalten, die Riegelplatte hat auf ihrer Oberseite wenigstens eine Verriegelungsstruktur (20, 21), **dadurch gekennzeichnet, dass** diese elastische Verbindung mindestens durch Torsion verformbar ist und **dadurch**, dass die Verriegelungsstruktur in die Öffnung zur Verriegelung (11), durch erzwungene Rückbewegung mit Torsion dieser elastischen Verbindung, eindringt und die Verriegelung durch Anschlagen gegen den unterhalb befindlichen, seitlichen Rand (23) der Öffnung zur Verriegelung (11) garantiert.

2. Vorrichtung zur Sicherheitsverriegelung nach Anspruch 1, **dadurch gekennzeichnet, dass** die Funktionsgruppe: Riegelplatte (13), elastische Verbindung(en) und das (die) Mittel zur Abstandhaltung ein Einzelteil bilden, das aus einem unterschiedlichen oder dem gleichen Material angefertigt ist, wie jenes, für das angefügte Teil.

3. Vorrichtung zur Sicherheitsverriegelung nach Anspruch 1, **dadurch gekennzeichnet, dass** die Funktionsgruppe Riegelplatte (13), elastische Verbindung(en) und Mittel zur Abstandhaltung mit dem angefügten Teil eine Einheit bilden, durch ein Element, das aus demselben Material und in einem Stück, im selben Formungsvorgang wie das angefügte Teil, hergestellt wurde.

4. Vorrichtung zur Sicherheitsverriegelung nach einem der Ansprüche 1 oder 2, **dadurch gekennzeichnet, dass** die Riegelplatte (13) über eine elastische Verbindung durch jede ihrer Körperseiten mit einem Seitenstück (14) oder (15) verbunden ist, das jedes mit der Rückseite des angefügten Teils durch ein Mittel zur Montage oder Befestigung verbunden ist, was der Vorrichtung einen allgemeinen Aufbau einer Brücke verleiht.

5. Vorrichtung zur Sicherheitsverriegelung nach einem der Ansprüche 1 oder 3, **dadurch gekennzeichnet, dass** die Riegelplatte (13) über eine elastische Verbindung durch jede ihrer Körperseiten mit einem Seitenstück (14) oder (15) verbunden ist, dessen Sockel jeweils aus demselben Material wie das angefügte Teil besteht, was der Vorrichtung einen allgemeinen Aufbau einer Brücke verleiht.

6. Vorrichtung zur Sicherheits-Längsverriegelung nach einem der vorstehenden Ansprüche, **dadurch gekennzeichnet, dass** sie mindestens einmal an einem der Enden des angefügten Teils vorhanden ist.

7. Vorrichtung zur Sicherheits-Längsverriegelung nach vorhergehendem Anspruch, **dadurch gekennzeichnet, dass** ihre Position mittig ist.

8. Vorrichtung zur Sicherheits-Längsverriegelung nach Anspruch 6, **dadurch gekennzeichnet, dass** sie sich nicht in der Mitte befindet.

9. Vorrichtung zur Sicherheits-Längsverriegelung nach einem der Ansprüche 4 oder 5, **dadurch gekennzeichnet, dass** die Riegelplatte mit jedem der Seitenstücke (14, 15), jeweils durch eine elastische Querverbindung (16, 17), transversal verbunden ist.

10. Vorrichtung zur Sicherheits-Längsverriegelung nach vorhergehendem Anspruch, **dadurch gekennzeichnet, dass** jede dieser Verbindungen (16, 17) flach ist und die allgemeine Form mit einer zentralen Verengung (18, 19) hat.

11. Vorrichtung zur Sicherheits-Längsverriegelung nach einem der vorstehenden Ansprüche, **dadurch gekennzeichnet, dass** die Riegelplatte (13) auf ihrer Oberseite zwei aufeinander folgende, sachdienliche Strukturen zur Verriegelung (20, 21) aufweist.

12. Vorrichtung zur Sicherheits-Längsverriegelung nach vorhergehendem Anspruch, **dadurch gekennzeichnet, dass** die aufeinander folgenden Strukturen zur Verriegelung (20, 21) jede ein Vorsprung ist, dessen hinterer Teil eine gerade Anlauffläche bildet (22, 24).

13. Vorrichtung zur Sicherheits-Längsverriegelung nach einem der Ansprüche 11 oder 12, **dadurch gekennzeichnet, dass** zwischen den zwei aufeinander folgenden Strukturen zur Verriegelung (20, 21) eine ebener Zwischenraum (26) existiert.

14. Vorrichtung zur Sicherheits-Längsverriegelung nach einem der Ansprüche 11 bis 13, **dadurch gekennzeichnet, dass** die zweite Struktur zur Verriegelung (21) auf seiner Rückseite eine Druckrampe (25) aufweist.

15. Vorrichtung zur Sicherheits-Längsverriegelung nach einem der vorstehenden Ansprüche, **dadurch gekennzeichnet, dass** die Riegelplatte (13) ein vorderes Ende in Form einer Umlenkfläche (28) hat.

16. Vorrichtung zur Sicherheits-Längsverriegelung nach einem der vorstehenden Ansprüche, **dadurch gekennzeichnet, dass** die Riegelplatte (13) an ihrem hinteren Ende einen Druckvorsprung (29, 30) hat.

17. Vorrichtung zur Sicherheits-Längsverriegelung nach vorhergehendem Anspruch, **dadurch gekennzeichnet, dass** der Druckvorsprung (29) eine konvex gewölbte Form hat.

18. Vorrichtung zur Sicherheits-Längsverriegelung nach Anspruch 16, **dadurch gekennzeichnet, dass** der Vorsprung des hinteren Endes eine ebene Druckfläche (30), die im Verhältnis zur Oberseite der Riegelplatte (13) erhöht ist und der eine schiefe Ebene (32) vorangeht.

19. Teil (2), vom Typ Schutzleiste, Streifen, Stoßleiste oder Ähnliches, angefügt und befestigt am Blech (9) der Karosserie eines Straßenfahrzeugs, das auf seiner Innenseite (3) mindestens einen Befestigungsclips (8) aufweist, dazu bestimmt, mit einer entsprechenden Öffnung zusammenzuwirken, die sich ihm gegenüber in der Karosserie (9) des Fahrzeugs befindet, **dadurch gekennzeichnet, dass** es mindestens eine Vorrichtung zur Sicherheits-Längsverriegelung (10) nach einem der vorstehenden Ansprüche hat.
